# DEMANDE DE BREVET EUROPEEN

(11) **EP 4 620 654 A1**
(43) Date de publication de la demande: **24.09.2025**
(21) Numéro de dépôt: 25165474.5
(22) Date de dépôt: 21.03.2025
(51) Int. Cl.: B29C 64/112, B29C 64/118, B29C 64/236, B29C 64/282, B29C 64/295, B29C 64/393, B33Y 30/00, B33Y 50/02, B22F 10/362, B22F 10/364, B22F 10/368, B22F 10/85, B22F 12/13, B22F 12/41, B22F 12/45, B22F 12/90

(54) **DISPOSITIF D'IMPRESSION 3D INCLUANT UN TRAITEMENT RADIATIF IN SITU AUTOUR DE LA TÊTE D'APPORT DE MATIÈRE THERMOACTIVABLE**

(30) Priorité: 22.03.2024 FR 2402898
(71) Demandeur: Cogit Composites, 18390 Saint-Germain du Puy (FR)
(72) Inventeur: ROUA, Christophe, 18000 Bourges (FR)
(74) Mandataire: IP Trust

(57) **Abrégé**

La présente invention concerne un système de dépose d'un matériau thermoactivable sur un substrat récepteur comprenant un dispositif de préparation d'un matériau thermoactivable présentant une tête d'apport mobile (11) selon plusieurs axes par rapport à un support (20) du substrat récepteur, un moyen de chauffage orientable en direction d'un premier point de la zone de dépose dudit matériau thermoactivable sur ledit substrat récepteur et un dispositif de mesure thermique sans contact fournissant une image thermique d'une première partie de la zone de dépose dudit matériau thermoactivable
Caractérisé en ce qu'il comporte :
- au moins un deuxième moyen de chauffage orientable en direction d'un second point de la zone de dépose dudit matériau thermoactivable
- Ledit système comportant un calculateur pour commander une première orientation dudit premier moyen de chauffage et une seconde orientation dudit second moyen de chauffage et pour commander l'activation, la modulation de flux d'énergie et/ou la désactivation de chacun desdits moyens de chauffage.

## Description

### Domaine de l'invention

La présente invention concerne le domaine de la fabrication additive (impression 3D) permettant de créer des pièces en volume par ajout de matière par des cordons de matière fusible par une buse mobile par rapport à un support d'impression.

Les buses des imprimantes se déplacent en général suivant 3 axes (3 translations d'espace : largeur (X), profondeur (Y), hauteur (Z). Certaines imprimantes 3D, en particulier robotisé, rajoutent 2 rotations sur la tête de buse (A et B) facilitant la conception des supports nécessaires à certaines pièces.

L'impression 3D de matériaux thermoactivables peut nécessiter que les couches fusionnent pour créer une structure solide et sans vide. La qualité de la structure résultante est généralement déterminée par l'intégrité de la liaison entre les couches imprimées. Il est souhaitable que les matériaux des couches adjacentes fusionnent complètement, afin que la structure résultante présente la même résistance physique et les mêmes propriétés mécaniques que le matériau sous-jacent. Si la liaison entre les couches est incomplète, la liaison couche à couche peut présenter des failles et des fragilités dégradant la résistance physique ultime de la structure résultante.

En général, chaque matériau thermoactivable présente une plage de températures optimale et une liaison avec le matériau sous-jacent qui se trouve lui-même à une température résultant de ses traitements thermiques antérieurs et de son inertie thermique locale : lorsqu'une zone est imprimée, elle commence à refroidir. La vitesse de refroidissement dépend de plusieurs facteurs, notamment du matériau lui-même, de la température du matériau lors de l'impression, de la température de la couche sous-jacente, de la température de l'environnement dans lequel la pièce est imprimée et de la forme physique du composant à imprimer. Ces différents paramètres évoluent en permanence, et il est très difficile de piloter l'impression additive dans des conditions optimales assurant des conditions thermiques appropriées à tout instant, quelle que soit la forme de la pièce à fabriquer.

Il est connu de procéder à une acquisition en temps réel de la température locale à l'aide d'une ééra thermographique. Cela permet à l'opérateur de surveiller visuellement la température globale de la pièce pendant son impression et d'ajuster la température du matériau thermoactivable à la sortie de la buse et/ou la vitesse de déplacement de la buse. Dans le cadre du présent brevet, on désignera par « matériau thermoactivable » un matériau dont l'état change en fonction de la température, par exemple un matériau thermofusible, un matériau thermo-réactif, un matériau thermoplastique, un matériau thermosensible...

Sera désigné par "tête d'apport", tout moyen qui apporte le matériau thermoactivable en une zone locale, par exemple et sans que cela soit restrictif par dépose projection, ou extrusion ou toute autre mode de dépôt de matériaux.

### État de la technique

Dans le domaine des systèmes de fabrication additive et des procédés de gestion thermique pour le dépôt de matériaux thermoactivables, plusieurs solutions techniques ont été proposées pour améliorer la qualité des impressions et limiter les défauts liés aux variations de température. La demande de brevet US 2021/170682 décrit un système comprenant un dispositif de préparation de matériau et une tête d'apport mobile, associé à un moyen de chauffage orientable et un dispositif de mesure thermique sans contact.

Elle propose un système de dépose de matériau thermoactivable comportant une tête d'apport mobile selon plusieurs axes et un moyen de chauffage orientable. Un dispositif de mesure thermique sans contact fournit une image thermique de la zone de dépose pour surveiller la qualité thermique du dépôt. Cependant, le système est limité à un seul moyen de chauffage et ne dispose pas d'un calculateur permettant de coordonner plusieurs sources de chaleur. L'objectif principal de cette demande de brevet US 2021/170682 est d'améliorer la fusion entre les couches déposées, mais elle ne traite pas de la gestion multizone ou de la modulation avancée des flux thermiques pour des géométries complexes. Cette solution de l'art antérieur se limite à un chauffage unique sans coordination avancée.

La demande de brevet US 2021 /187618 concerne des outils chauffants permettant de presser et de graver des motifs sur une feuille, avec un contrôle de la position et de la température pour garantir une qualité uniforme. Bien que ce système puisse inclure des capteurs pour ajuster la température en fonction des conditions, il s'applique uniquement à des procédés en 2D pour des substrats plats. Cette solution n'implique pas de gestion thermique avancée ni de contrôle multizone pour des systèmes de fabrication additive, et son champ d'application est très différent de celui de l'invention. Cette solution connue se concentre sur des procédés d'embossage thermique et ne traite pas de la gestion thermique complexe requise pour des applications en fabrication additive.

Enfin, la demande de brevet US 2022/063204 décrit un système de fabrication additive avancé utilisant une gestion thermique locale (LTM). Ce système repose sur un unique moyen de chauffage, tel qu'un laser, pour préchauffer des zones spécifiques de la couche déjà déposée. US 2022/063204 intègre un contrôle basé sur l'analyse topologique, combinant des capteurs (caméras infrarouges, thermocouples) pour ajuster la puissance thermique en temps réel. L'objectif est d'améliorer la cohésion entre les couches en fonction de leur géométrie et de leurs propriétés thermiques. Toutefois, US 2022/063204 ne propose pas l'utilisation de plusieurs chauffages orientables et coordonnés, limitant sa capacité à gérer des zones distinctes de manière indépendante. Ce système avancé de gestion thermique locale (LTM) utilise un unique dispositif de chauffage, avec un contrôle basé sur l'analyse topologique et thermique en temps réel, et il ne propose pas l'utilisation de plusieurs moyens de chauffage indépendants.

### Inconvénients de l'art antérieur

Les solutions de l'art antérieur ne sont pas totalement satisfaisantes car elles ne permettent pas de traiter la totalité des artefacts thermiques autour de la zone de dépose du cordon extrudée. En effet, la tête d'extrusion ou tête d'apport masque en partie le champ optique de la caméra thermique ou d'un laser de réchauffage, laissant certains points mal maîtrisés d'un point de vue thermique ou nécessitant une rotation peu réactive de l'ensemble du dispositif de chauffage voir de la tête d'apport elle-même et/ou nécessitant de multiples tours d'impression en continue peu compatible des cheminements de câbles par exemple.

Les systèmes connus dans l'état de la technique, tels que décrits dans les documents antérieurs susvisés, présentent plusieurs limitations importantes en ce qui concerne la gestion thermique dans des procédés de fabrication additive. La demande de brevet US 2021/170682, bien qu'intégrant un moyen de chauffage orientable et un dispositif de mesure thermique, est limité à l'utilisation d'une seule source de chaleur, ce qui restreint sa capacité à gérer efficacement des zones multiples ou complexes de la surface d'impression. US 2021/187618, centrée sur un procédé d'embossage thermique, est conçu pour des substrats plats et des applications en 2D, et n'est pas adapté aux exigences spécifiques de la fabrication additive en termes de contrôle thermique localisé et dynamique. Enfin, bien que US 2022/063204 introduise une gestion thermique avancée grâce à des capteurs et un contrôle en temps réel, il repose également sur un seul moyen de chauffage, limitant ainsi sa flexibilité pour traiter simultanément plusieurs zones distinctes. Aucune des solutions connues ne propose un système capable de coordonner de manière dynamique et précise plusieurs moyens de chauffage orientables pour optimiser les conditions thermiques sur des géométries complexes ou des zones multiples. Ces lacunes se traduisent par une qualité d'impression réduite, des défauts de fusion entre couches et une adaptabilité limitée aux géométries variées.

### Solution apportée par l'invention

Afin de remédier à ces inconvénients, la présente invention concerne notamment un système de dépose d'un matériau thermoactivable sur un substrat récepteur comprenant un dispositif de préparation d'un matériau thermoactivable présentant une tête d'apport mobile selon plusieurs axes par rapport à un support du substrat récepteur, un moyen de chauffage orientable en direction d'un premier point de la zone de dépose dudit matériau thermoactivable sur ledit substrat récepteur et un dispositif de mesure thermique sans contact fournissant une image thermique d'une première partie de la zone de dépose dudit matériau thermoactivable Caractérisé en ce qu'il comporte :
- au moins un deuxième moyen de chauffage orientable en direction d'un second point de la zone de dépose dudit matériau thermoactivable
- Ledit système comportant un calculateur pour commander une première orientation dudit premier moyen de chauffage et une seconde orientation dudit second moyen de chauffage et pour commander l'activation, la modulation de flux d'énergie et/ou la désactivation de chacun desdits moyens de chauffage.

Le dispositif de mesure thermique sans contact peut être composé d'une ou plusieurs caméras pour couvrir la zone de dépose.

La zone de perception de caméra n'est pas nécessairement la même que la zone de dépose. Avantageusement, lesdits deux moyens de chauffage sont disposés de part et d'autre dudit dispositif de préparation d'un matériau thermoactivable.

Selon une variante, le système de dépose comporte en outre une dispositif de mesure thermique sans contact additionnel fournissant une deuxième image thermique d'une deuxième partie de la zone de dépose dudit matériau thermoactivable, complémentaire de ladite première partie par rapport à la tête d'apport,

Selon une variante, l'un au moins desdits moyens de chauffage est constitué par un laser ou une lampe rayonnante focalisée.

Avantageusement, lesdits moyens de chauffage sont constitués par un laser unique, un séparateur de faisceau et à deux systèmes de balayage à miroirs galvanométriques.

Selon une autre variante, lesdits moyens de chauffage sont constitués par un laser unique et une fibre optique disposée autour de la tête d'apport, et présentant une pluralité de sorties.

Selon une mode de réalisation particulier, le système comporte en outre une caméra fournissant une image texturée de ladite zone de dépose dudit matériau thermoactivable.

### Description détaillée d'un exemple non limitatif de réalisation

La présente invention sera mieux comprise à la lecture de la description qui suit, concernant des exemples non limitatifs de réalisation illustré par les dessins annexés où :
[FIG. 1] La figure 1 représente une vue schématique d'un premier exemple d'un système selon l'invention
[FIG. 2] La figure 2 représente une vue schématique d'un deuxième exemple d'un système selon l'invention
[FIG. 3] La figure 3 représente une vue schématique d'un troisième exemple d'un système selon l'invention
[FIG. 4] La figure 4 représente une vue schématique d'un quatrième exemple d'un système selon l'invention
[FIG. 5] La figure 5 représente une vue schématique d'un cinquième, sans les caméras exemple d'un système selon l'invention.
[FIG. 6] La figure 6 représente une vue schématique d'un cinquième, avec les caméras exemple d'un système selon l'invention.

### Principes généraux de l'invention

Le système selon l'invention comprend de manière connue un dispositif de préparation du matériau thermoactivable, par exemple une extrudeuse (10), comportant une tête d'apport (11) délivrant un cordon de matériau thermoactivable selon une trajectoire définit par le déplacement relatif de la tête d'apport (11) par rapport au support (20) du substrat d'impression. L'installation comprend au moins deux caméras infrarouges (31, 32) disposées de part et d'autre de l'extrudeuse (10) de manière à acquérir deux plans ou zones respectivement (41, 42) se recouvrant légèrement au niveau de la sortie de la tête d'apport (11).

D'une façon plus générale, il peut être employer tout type de dispositif de mesure thermique sans contact, une caméra thermique étant un simple exemple d'un tel dispositif.

De préférence, les deux caméras infrarouges (31, 32) sont disposées symétriquement par rapport à l'axe longitudinal de l'extrudeuse (10), sur un axe transversal correspondant à la direction instantanée du déplacement relatif de l'extrudeuse (10) par rapport au support (20), de façon que le champ optique respectivement (51, 52) de chacune des caméras infrarouges (31, 32) inclus le point de dépose du matériau thermoactivable de matériau thermoactivable par la tête d'apport (11).

Cette configuration permet d'acquérir deux images thermiques avec un recouvrement, et de construire une carte dynamique des températures de la zone de dépose du matériau thermoactivable de matériau thermoactivable par la tête d'apport (11), ainsi que des surfaces en amont et en aval de cette zone.

Le système comporte aussi au moins deux moyens de chauffage formés de deux lasers ou par un laser unique (1) associé à un séparateur de faisceau (2) et à deux systèmes de balayage à miroirs galvanométriques (3, 4).

Ces moyens de chauffage sont pilotés d'une part pour activer ou désactiver les deux faisceaux, et pour les diriger dans une direction voisine de la zone de dépose du matériau thermoactivable de matériau thermoactivable par la tête d'apport (11), notamment en amont de la zone de dépose du matériau thermoactivable de matériau thermoactivable pour l'un des faisceaux et en aval de la zone de dépose du cordon de matériau thermoactivable pour l'autre faisceau.

Des actionneurs (5, 6 ; 7, 8) pilotés par un calculateur commande l'orientation et la wobulation des faisceaux correspondants, c'est-à-dire un balayage de faible excursion selon des directions latérales et/ou longitudinales par rapport à l'axe du segment du cordon en amont ou en aval de la zone de dépose du cordon de matériau thermoactivable pour moduler la surface et la température de chauffage.

### Principe de fonctionnement

Le but de l'invention est de permettre d'ajuster en temps réel et de manière dynamique la température du substrat en amont de la dépose d'un cordon de matériau thermoactivable et/ou la température du cordon déposé en aval.

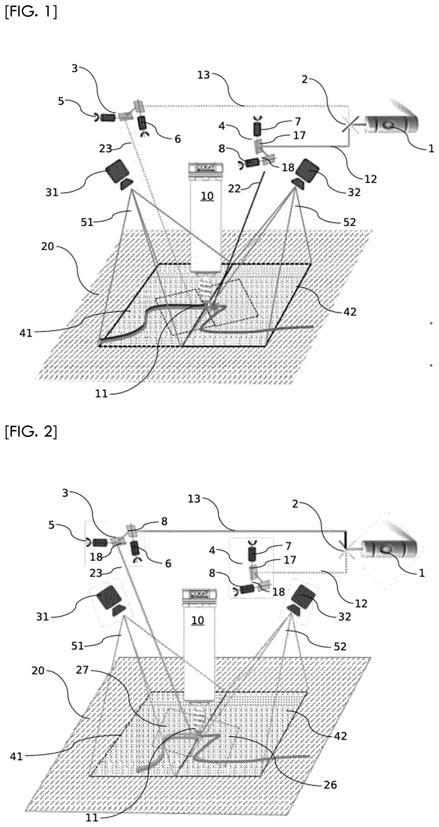

Pour pouvoir couvrir 360° autour de la tête d'apport (11), la source de chauffage (1) est découpée en deux au moins, de sorte que les zones partielles (26) et (27) de traitement thermique illustrées sur la figure 2 soient complémentaires et que leur union soit continue autour de la ladite tête d'apport. Ainsi, l'acheminement de la source de chauffage selon le besoin vers une zone en amont du point de dépose ou une zone en aval du point de dépose. Ces deux zones présentent un recouvrement (intersection entre les zones partielles (26) et (27) dans le cas d'un découpage en deux).

Dans la description, l'utilisation du terme « extrudeur » doit être comprise comme désignant un exemple non limitatif, tout autre moyen de préparation du matériau à déposer pouvant être utilisé dans l'invention.

Les sources de chaleur permettent :
- d'ajouter un flux de chaleur juste avant la dépose du nouvel apport de matière (filament, ..) pour favoriser la cohésion inter-couche
- maîtriser le refroidissement post-dépose du nouveau dépôt pour favoriser la coalescence et l'étalement du matériau à l'état fondu sur le substrat
- ajuster les temps de cristallisation de matériau concerné par le phénomène

Cette solution permet aussi d'éviter de chauffer l'environnement ou de réduire sa chauffe, et de compenser une température ambiante plus basse par une chauffe locale (intérêt économie d'énergie, suppression d'une enceinte thermique globale). La cartographie thermique de l'ensemble de la zone de dépose incluant les parties amont et aval permet de piloter en temps réel les moyens de chauffage.

### Positionnement du laser et des caméras par rapport à la tête d'apport

Les sources de chaleur radiatives de type lasers, sans être limitatif sont disposées de part et d'autre du dispositif de préparation du matériau thermoactivable, de manière fixe, ou avec une possibilité de rotation par rapport à l'axe longitudinal du dispositif de préparation du matériau thermoactivable, avec une amplitude inférieure ou égale à 360°.

Chacun des faisceaux de balayage est commandé par un calculateur pour déterminer son orientation principale et sa trajectoire de wobulation, par rapport à la direction principale de la trajectoire de dépose du cordon thermoactivable ; ainsi que son activation, sa modulation de flux thermique ou sa désactivation.

Cela permet d'affecter l'un des faisceaux à une fonction de préchauffage de la zone du substrat en amont du point de dépose du cordon et/ou un autre faisceau à une fonction de contrôle du refroidissement du cordon qui vient d'être déposé, en aval de la zone de dépose du cordon. Cela permet aussi d'inverser la fonction attribuer à chacun des faisceaux en fonction de l'orientation de la direction principale de la trajectoire de dépose, pour éviter le masquage par la tête d'apport (11).

Lorsque le système met en œuvre deux caméras (31,32), elles peuvent être maintenues fixes dans le même repère que le dispositif de dépose, ou mobile en rotation par rapport à l'axe longitudinal du dispositif de dépose, avec une course angulaire limitée à 360°, pour couvrir la totalité de la zone d'intérêt grâce au recouvrement partiel des champs des caméras Fig1 (41, 42).

### Contexte de commande illustré par la figure 1

Dans ce premier mode de fonctionnement, le premier faisceau source (12) est actif, et orienté et modulé par le système de balayage (4) dans une direction en amont du point de dépose de la matière thermoactivable afin d'assurer un préchauffage du substrat.

Dans l'exemple, le laser (1), fixe dans le repère de la tête d'apport (11), assure la Fonction de préchauffe du substrat en amont de la dépose. Le guidage du faisceau (22) est assuré par des miroirs galvano (17, 18) et peut pointer ou balayer le substrat sur la trajectoire de dépose. La puissance et la fréquence du faisceau laser amont (22) sont pilotées en boucle fermée ou par un algorithme spécifique selon la consigne thermique à atteindre et les températures du Substrat lues par le dispositif de caméras IR (31 32). Dans le cas où le substrat à préchauffer se trouve de l'autre côté, alors le faisceau (23) serait dirigé vers cette zone. La zone de pré-Chauffe est pilotée en boucle fermée par les mesures à 360° des caméras IR et localisé sur la zone du substrat voisine du point de dépose du cordon thermoactivable.

Avantages : Le système est réactif et rapide car il n'y a pas besoin de faire tourner le laser (1) et/ou l'effecteur portant l'extrudeur (10) pour pointer sur la zone locale à chauffer. Un seul laser (1) est capable d'assurer une fonction (ici pré-chauffe) de part et d'autre de la tête d'apport (11). Avantageusement, le faisceau qui assure la fonction de pré-chauffe traitera le substrat proche de la tête d'apport afin de limiter les pertes thermiques entre la sortie de la zone de traitement et le début de dépôt effectif de matériau thermo-activable.

### Contexte de commande illustré par la figure 2

Pour pouvoir couvrir 360° autour de la buse (11) de dépose, une source laser (1) est découpée afin d'acheminer selon le besoin de chauffage local vers des zones élargies du substrat (26, 27). Les zones (26, 27) présentent un recouvrement.

Le second faisceau laser (13), fixe dans le repère de la tête d'apport, est actif et assure la Fonction « maîtrise de refroidissement » en zone (27). Le guidage du faisceau (23) est assuré par des miroirs galvano (8, 18) et peut pointer ou balayer le Substrat sur sa trajectoire. La puissance et la fréquence du faisceau (23) sont pilotées en boucle fermée ou par un algorithme spécifique selon la consigne thermique à atteindre et les mesures thermiques du dispositif de caméras IR.

Dans le cas où le substrat à pré-chauffer se trouverait en Zone (26), alors le faisceau (22) serait dirigé vers cette zone, l'état du séparateur de faisceau laser (2) étant alors inversé.

La fonction de « pré-chauffe » illustrée par le mode de fonctionnement de la figure 1 est primordial pour la qualité d'interface/soudage.

La fonction illustrée par la figure 2 permet d'adapter le profil de refroidissement sur une zone de balayage plus grande ; la température ambiante et la température effective du corde juste déposé interviennent dans la fixation des paramètres du faisceau laser de balayage

Avantageusement, les configurations de la figure 1 et de la figure 2 assurant respectivement les fonctions de « pré-chauffe » et de « maîtrise de refroidissement » peuvent co-exister autour de la tête d'apport (11) afin de remplir simultanément ces deux fonctions et ce à 360° autour de la tête d'apport.

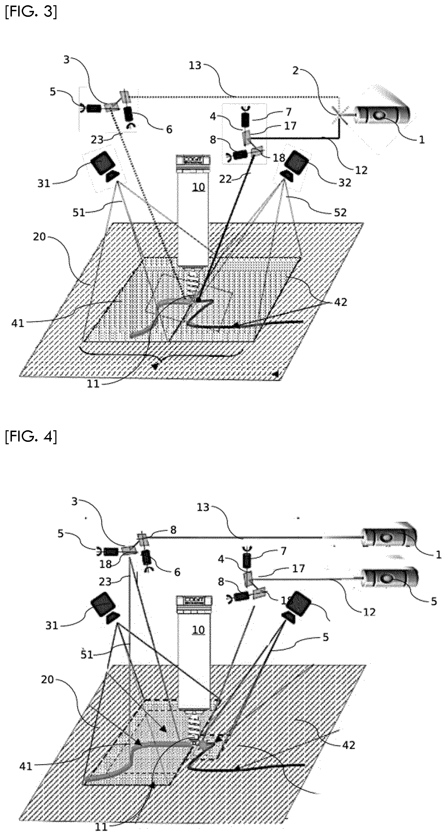

### Contexte de commande illustré par la figure 3

Les deux caméras IR (31, 32) assurent la lecture thermique des zones (41, 42) pour fournir les informations au calculateur assurant le pilotage des actionneurs (4 à 8) des miroirs galvano (7, 17 ; 8, 18) pour ajouter un flux thermique au substrat sur la future trajectoire de dépose avec une boucle d'asservissement du laser grâce aux mesures thermiques.

### Contexte de commande illustré par la figure 4

Dans cet exemple, le système comprend un laser (1) dédié à la préchauffe et un laser (5) dédié à la maîtrise de refroidissement » en aval.

Le dispositif prévoit d'assurer à la fois la Fonction de « pré-chauffe » (en amont) et la Fonction 2 de «maîtrise du refroidissement en aval ».

Pour cela, la tête d'apport (11) est orientable en rotation autour de son axe pour que la zone (26) destinée à la pré-chauffe pointe effectivement sur le substrat quelle que soit la trajectoire de dépose. Une caméra Infra-Rouge (31) mesure localement la température du substrat légèrement avant la zone (26) du traitement laser ainsi que l'échauffement qu'il génère dans le but d'effectuer une régulation en boucle fermée.

La zone (36) peut être plus restreinte car localisée proche du point de dépose. Une caméra à haute fréquence est souhaitable. Des miroirs galvano sont une option pour réaliser un balayage spécifique sur le substrat.

En aval, la zone (42) est plus large car la portion du nouveau dépôt en cours de refroidissement est plus longue et sinueuse. Comme la tête d'apport tourne sur elle-même, Des miroirs galvano sont nécessaires pour que le Laser de Fonction de **maîtrise** du refroidissement s'adapte au changement d'orientation de la tête et la forme complexe à traiter.

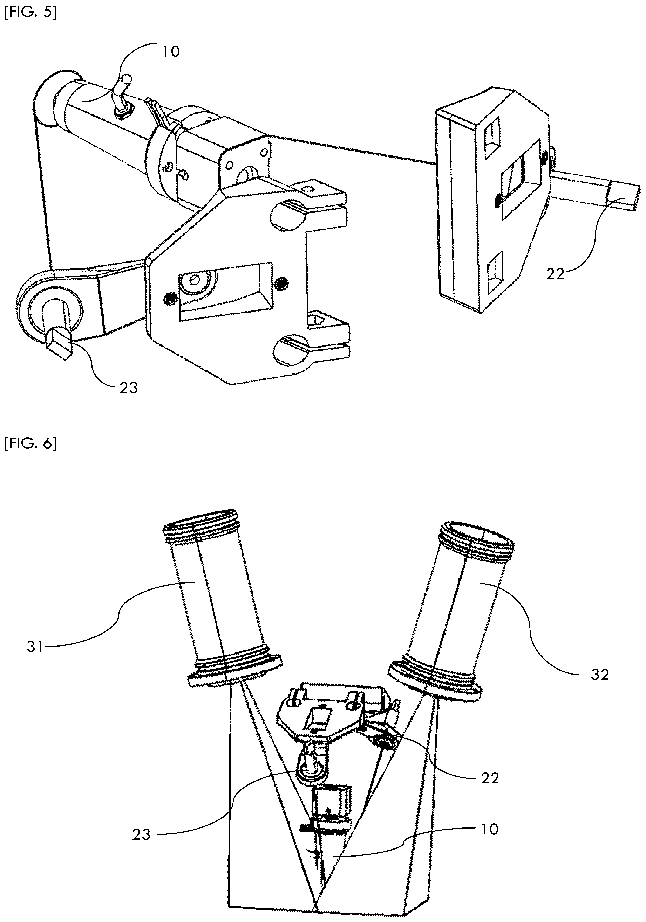

### Contexte de commande illustré par les figures [FIG. 5] et [FIG. 6]

Dans la variante de réalisation illustrée par les figures [FIG. 5] et [FIG. 6], le management est assurée par deux sources de chauffe focalisées (22, 23) disposées 'de part et d'autre de l'extrudeur ou tête de dépose (10) dont l'orientation du faisceau est gérée par le déplacement sur un arc de cercle à 180° environ. Ce même demi-dispositif est répliqué de l'autre côté de la tête de dépose (10).

L'orientation du faisceau laser n'est pas assuré dans cet exemple par de miroirs galvano. L'extrémité de la fibre optique transmettant le faisceau laser est déplacée mécaniquement sur une portion angulaire. Cette alternative à la wobulation (mouvement selon un seul axe de rotation) permet de rendre plus uniforme l'angle d'attaque du faisceau, en particulier en zone extrême -90° et +90°.

Cette alternative introduit un double dispositif de chauffage focalisé, de part et d'autre de la tête de dépose de matériau thermoactivable, afin d'assurer un contrôle précis des conditions thermiques lors de l'impression. L'objectif est d'améliorer la qualité des liaisons inter-couches et d'optimiser la cohésion des matériaux en assurant un contrôle dynamique de la température en amont et en aval de la dépose.

Le système illustré par les figures [FIG. 5] et [FIG. 6] repose sur deux sources de chauffage focalisées (31, 32), disposées de chaque côté de la tête d'apport (1), chacune capable de pivoter sur un arc de cercle d'environ 180°. Ce dispositif est x thermique complète autour de la tête de dépose.

Contrairement aux solutions utilisant des **miroirs galvano,** le système décrit ici évite ces composants en orientant mécaniquement l'extrémité de la fibre optique transmettant le faisceau laser. Ce déplacement mécanique du faisceau suit une portion angulaire définie, offrant une alternative efficace à la wobulation, qui se limite habituellement à un seul axe de rotation. Ce principe permet notamment :
- Une uniformisation de l'angle d'attaque du faisceau laser sur la surface de dépôt.
- Une amélioration de la distribution énergétique du laser en zones extrêmes (-90° et +90°).
- Une meilleure maîtrise du chauffage dans les zones critiques où l'accumulation de chaleur pourrait affecter la qualité de la dépose.

Le système met en œuvre un calculateur embarqué, qui pilote en temps réel :
- L'activation et la désactivation des sources de chauffage en fonction des besoins.
- La modulation du flux d'énergie pour adapter la puissance thermique aux conditions locales de l'impression.
- L'orientation des sources de chaleur, assurant un ajustement automatique en fonction des mouvements de la tête d'apport.

Grâce à ces fonctionnalités, la gestion thermique du procédé est optimisée pour garantir :
- Un préchauffage contrôlé du substrat avant dépose, facilitant la fusion inter-couche.
- Une maîtrise du refroidissement post-dépose, favorisant une solidification homogène sans tensions internes.
- Une réduction des déformations et des défauts structurels liés à des écarts thermiques non maîtrisés.

Cette alternative permet de répondre aux inconvénients de l'art antérieur :
- Absence de gestion multizone : l'utilisation d'une seule source de chauffage ne permet pas une modulation fine sur des géométries complexes.
- Manque de flexibilité : l'orientation du chauffage repose sur des miroirs galvano, introduisant des contraintes de précision et de réactivité.
- Imprécision en zones extrêmes : les angles critiques ne sont pas toujours couverts uniformément, ce qui peut entraîner des défauts de fusion inter-couche.

Cette variante présente plusieurs avantages :
- Utilisation de deux sources de chauffage synchronisées pour une gestion thermique en 360° autour de la tête d'apport.
- Un contrôle mécanique direct de l'orientation du faisceau au lieu d'un balayage optique par miroirs.
- Une modulation thermique fine et dynamique, adaptative aux variations des conditions d'impression.

Ce système de chauffage innovant est particulièrement adapté aux procédés de fabrication additive nécessitant un **contrôle précis de la température** et une **qualité d'adhésion optimisée** entre couches successives. Il peut être appliqué à divers matériaux thermoactivables, y compris les polymères, composites et alliages métalliques. De plus, l'absence de miroirs galvano simplifie la conception du système tout en améliorant sa robustesse et sa fiabilité en production.

## Revendications

1. - Système de dépose d'un matériau thermoactivable sur un substrat récepteur comprenant un dispositif de préparation d'un matériau thermoactivable présentant une tête d'apport (11) mobile selon plusieurs axes par rapport à un support du substrat (26, 27) récepteur, un moyen de chauffage (1) orientable en direction d'un premier point de la zone de dépose dudit cordon sur ledit substrat (26, 27) récepteur et un dispositif de mesure thermique (31,32), sans contact fournissant une image thermique d'une première partie de la zone de dépose dudit matériau thermoactivable
**Caractérisé en ce qu'**il comporte :
- au moins un deuxième moyen de chauffage orientable en direction d'un second point de la zone de dépose dudit matériau thermoactivable
- Ledit système comportant un calculateur pour commander une première orientation dudit premier moyen de chauffage et une seconde orientation dudit second moyen de chauffage (31,32) et pour commander l'activation, la modulation de flux d'énergie et/ou la désactivation de chacun desdits moyens de chauffage (31,32).

2. - Système de dépose d'un matériau thermoactivable sur un substrat récepteur selon la revendication 1 **caractérisé en ce que** lesdits deux moyens de chauffage sont disposés de part et d'autre dudit dispositif de préparation d'un matériau thermoactivable.

3. - Système de dépose d'un matériau thermoactivable sur un substrat récepteur selon la revendication 1 **caractérisé en ce qu'**il comporte en outre un dispositif de mesure thermique sans contact additionnel fournissant une deuxième image thermique d'une deuxième partie de la zone de dépose dudit matériau thermoactivable, complémentaire de ladite première partie par rapport à la tête d'apport (11).

4. - Système de dépose d'un matériau thermoactivable sur un substrat récepteur selon la revendication 1 **caractérisé en ce que** l'un au moins desdits moyens de chauffage est constitué par un laser ou une lampe rayonnante focalisée.

5. - Système de dépose d'un matériau thermoactivable sur un substrat récepteur selon la revendication 1 **caractérisé en ce que** lesdits moyens de chauffage sont constitués par un laser unique, un séparateur de faisceau (2) et à deux systèmes de balayage à miroirs galvanométriques.

6. - Système de dépose d'un matériau thermoactivable sur un substrat récepteur selon la revendication 1 **caractérisé en ce que** lesdits moyens de chauffage sont constitués par un laser unique et une fibre optique disposée autour de la tête d'apport (1 1), et présentant une pluralité de sorties.

7. - Système de dépose d'un matériau thermoactivable sur un substrat récepteur selon la revendication 1 **caractérisé en ce qu'**il comporte en outre une caméra fournissant une image texturée de ladite zone de dépose dudit matériau thermoactivable.

8. - Système de dépose d'un matériau thermoactivable sur un substrat récepteur selon l'une quelconque des revendications précédentes, **caractérisé en ce que** l'orientation du faisceau laser est assurée par le déplacement mécanique de l'extrémité de la fibre optique transmettant le faisceau laser sur une portion angulaire.
